# DEMANDE DE BREVET EUROPEEN

(11) **EP 1 350 778 A1**
(43) Date de publication de la demande: **08.10.2003**
(21) Numéro de dépôt: 03370014.7
(22) Date de dépôt: 02.04.2003
(51) Int. Cl.: C05F 7/00, C05F 11/00, C02F 11/02, C05F 17/00

(54) **Procédé de traitement de boues de stations d'épuration**

(30) Priorité: 02.04.2002 FR 0204100
(71) Demandeur: Ard, Isabelle, 67400 Illkirch-Graffenstaden (FR); Bonvallot, Jean-Francois, 67400 Illkirch-Graffenstaden (FR); Peenaert, Eugène, 80200 Doingt-Flamicourt (FR)
(72) Inventeur: Ard, Isabelle, 67400 Illkirch-Graffenstaden (FR); Bonvallot, Jean-Francois, 67400 Illkirch-Graffenstaden (FR); Peenaert, Eugène, 80200 Doingt-Flamicourt (FR)
(74) Mandataire: Hennion, Jean-Claude

(57) **Abrégé**

Le procédé concerne le traitement de boues de stations d'épuration, notamment biologiques, qui contiennent des souches microbiologiques, ont une siccité , un rapport matière organique/matière minérale et un rapport carbone/azote (C/N) donnés. Il consiste à :
a) ajouter auxdites boues des apports consistant en une matière minérale, au moins un composant riche en carbone et éventuellement d'autres composants,
b) à procéder au mélange des boues et desdits apports en sorte d'obtenir un mélange aéré , de préférence de porosité à l'air supérieur à 40%,
c) à maintenir le mélange dans un état aéré , avec une siccité d'au plus 80%, jusqu'à obtention d'un support de culture, comportant des composés humiques simples, résultant de la digestion en aérobiose des matières organiques contenues dans les boues.

La quantité de matière minérale ajoutée est déterminée en sorte que le rapport matière organique/matière minérale dans le mélange soit tel qu'il diminue ou empêche la fermentation des matières organiques. La quantité de composant riche en carbone ajoutée est déterminée en sorte d'obtenir pour le mélange un rapport C/N constamment supérieur à environ 8,5 et de préférence compris entre 8,5 et 15.

## Description

La présente invention concerne le traitement de boues provenant de stations d'épuration, notamment d'épuration biologique. Elle concerne plus particulièrement un procédé permettant de transformer lesdites boues en un support de culture directement utilisable , présentant les caractéristiques d'un substrat prêt à planter.

On connaît quatre voies principales possibles pour recycler ou éliminer les boues de stations d'épuration biologique.

La première voie consiste dans l'épandage direct, sur le sol, desdites boues, éventuellement chaulées ou préalablement digérées en anaérobiose. Cette technique présente l'inconvénient d'une odeur nauséabonde et d'une mise en oeuvre contraignante.

Une seconde voie consiste dans l'incinération des boues. Cette technique est particulièrement coûteuse et demande des investissements lourds.

Une troisième voie , qui est une alternative à l'épandage direct, réside dans le compostage qui est la transformation des boues par fermentation. Le compostage est également producteur d'odeurs nauséabondes et demande par ailleurs un temps important de fabrication , qui peut être de l'ordre de 10 semaines et de maturation qui peut être de l'ordre de 6 mois.

La quatrième voie réside dans l'enfouissement technique des boues. Cette dernière voie est cependant en passe d'être purement et simplement interdite.

Le but de la présente invention est de proposer une cinquième voie, alternative des voies précitées, qui présente l'avantage de ne pas produire d'odeurs nauséabondes , d'avoir une durée de transformation plus rapide que le compostage et de produire , à moindre coût , un support de culture directement utilisable.

Ce but est parfaitement atteint par le procédé de l'invention. Il s'agit d'un procédé de traitement de boues de stations d'épuration, notamment biologiques , lesdites boues contenant des souches microbiologiques , ayant une siccité donnée , un rapport matière organique/matière minérale donné et un rapport carbone/azote (C/N) donné.

De manière caractéristique , le procédé consiste à :
a) ajouter auxdites boues des apports consistant en une matière minérale , au moins un composant riche en carbone et éventuellement d'autres composants,
b) à procéder au mélange des boues et desdits apports en sorte d'obtenir un mélange aéré,
c) à maintenir le mélange dans un état aéré , avec une siccité d'au plus 80% , jusqu'à obtention d'un support de culture , comportant des composés humiques simples, résultant de la digestion en aérobiose des matières organiques contenues dans les boues. De plus la quantité de matière minérale ajoutée est déterminée en sorte que le rapport matière organique/matière minérale dans le mélange soit tel qu'il diminue ou empêche la fermentation des matières organiques. Enfin la quantité de composant riche en carbone ajoutée est déterminée en sorte d'obtenir pour le mélange un rapport C/N toujours supérieur à 8,5, de préférence compris entre 8,5 et 15.

En fait le principe du procédé de l'invention est de permettre , en l'amplifiant et en l'optimisant , le déroulement du phénomène naturel de transformation d'une matière organique fraîche en composés humiques.

Les boues de stations d'épuration contiennent , outre de l'eau , des matières organiques (polysaccharide, cellulose...) , des matières en suspension, notamment des éléments minéraux , des ferments (lactiques , alcooliques , acétiques ...). De manière générale , dans la matière sèche , on trouve de l'ordre de 75 à 80% de matière organique et de l'ordre de 20 à 25% de matières minérales. C'est dans ces conditions que se déroule la fermentation lors du compostage.

Selon la présente invention pour empêcher ou diminuer de manière conséquente la fermentation , on déséquilibre le rapport matière organique/matière minérale en apportant aux boues de la matière minérale et ce de manière à orienter la réaction biologique hors des conditions requises pour le développement de la fermentation.

La transformation de la matière organique fraîche en composés humiques est un phénomène naturel aérobie dont la rapidité dépend des paramètres physiques et chimiques. Le mélange des boues et des apports doit donc être aéré, c'est-à-dire poreux, de manière à permettre une circulation suffisante de l'air assurant le développement de ce phénomène aérobie. De préférence, il a une porosité à l'air supérieure à 40%. De plus ce phénomène a besoin d'une certaine quantité d'humidité , qui doit être d'au moins 20% dans le mélange. Enfin l'optimisation de ce phénomène naturel nécessite une quantité importante de carbone, relativement au composé azoté.

De préférence les apports présentent une granulométrie fine , inférieure ou égale à 5mm, avantageusement de 2 à 3 mm. De plus une partie du composant riche en carbone présente une granulométrie inférieure à 500 micromètres. Cette disposition particulière favorise la rapidité de la transformation de la matière organique en composés humiques ; elle permet d'obtenir dans de bonnes conditions le mélange aéré souhaité ; elle évite également le tamisage du produit fini, à savoir le support de culture.

Dans un mode de réalisation , la matière minérale qui est ajoutée aux boues est une terre agricole ordinaire , de préférence une terre agricole riche en argile. Eventuellement il peut s'agir d'une terre de déblai saine, débarrassée des cailloux, récupérable sur les chantiers de construction ou d'infrastructure.

Dans un mode de réalisation, le composant riche en carbone qui est ajouté aux boues est constitué d'hydrate de carbone.

Avantageusement ce composant riche en carbone se présente , au moins pour une partie , à l'état micronisé, la taille des particules étant comprise entre 0,05 et 0,5mm. Il peut s'agir notamment de farine de bois. Cette présentation, à l'état micronisé , permet , à poids égal , d'obtenir une surface d'échange beaucoup plus importante que celle que l'on aurait avec des particules plus grossières.

S'agissant de farine de bois , il est préférable d'utiliser des espèces de végétaux ligneux dont le carbone est assimilé le plus rapidement et donc des espèces contenant le moins possible de tanin non hydrolysable. On retient en conséquence l'épicéa , le sapin ,l'aulne, le frêne , le peuplier , le hêtre et le chêne.

Dans un mode de réalisation, on utilise comme composant riche en carbone une matière végétale ayant séjourné sur le sol. L'intérêt de ce choix est qu'une telle matière contient une faune et une flore favorables à la transformation de la matière organique des boues en composés humiques. Il peut s'agir notamment résidus de teillage de lin ou de traitement du chanvre : anas et poussières de lin, chèvenotte et poussières de chanvre et de manière générale des résidus de transformation de plantes ayant eu, après récolte, un contact prolongé avec le sol.

Selon un mode préféré de réalisation, le procédé comporte une étape de recyclage d'au moins une partie du support de culture obtenu comme apport partiel (voire total) de matière minérale et de composant riche en carbone et également d'apport complémentaire de souches microbiologiques dans le mélange. Un tel recyclage non seulement économise les matières premières (matière minérale et composant riche en carbone) nécessaires à la constitution du milieu favorable à la transformation aérobie des boues, dénommée bio-intégration , mais également accélère cette transformation du fait de l'apport complémentaire de souches microbiologiques, tout en diminuant considérablement le coût de production.

Le maintien du mélange dans un état aéré est obtenu notamment par broyage , émiettage ou laminage et éventuellement tamisage, les refus de tamisage étant recyclés au niveau de l'émiettage. Le maintien de la siccité du mélange a une valeur qui est au plus de 80% (ce qui correspond à un taux d'humidité d'au moins 20%) peut être obtenu, si besoin est, par apport d'eau , notamment par pulvérisation.

Parmi les apports pour la constitution du mélange aéré , on peut introduire comme autres composants des composants contenant du calcium , par exemple sous forme d'hydroxyde ou de carbonate, du magnésium, du potassium, du phosphore et des composés azotés.

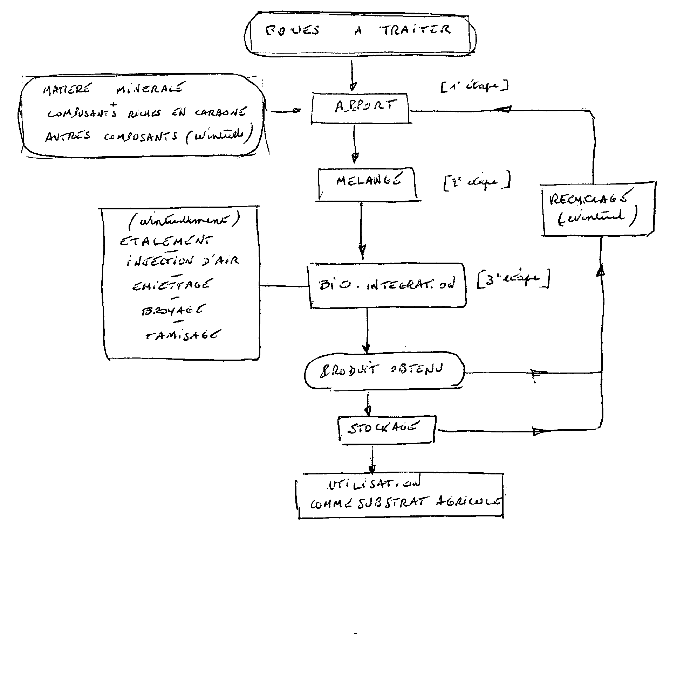

La présente invention sera mieux comprise à la lecture de la description qui va être faite d'un exemple de mise en oeuvre du procédé de traitement de boues de stations d'épuration biologique , basé sur la transformation de la matière organique fraîche contenue dans lesdites boues en composés humiques par un phénomène naturel de digestion aérobie dénommé bio-intégration, illustré par le dessin annexé dont la figure unique est une présentation sous forme de diagramme des différentes étapes du procédé.

Les boues à traiter dont il est question sont de préférence des boues de stations d'épuration biologique , c'est-à-dire des boues qui contiennent des matières organiques , des matières minérales et des souches microbiologiques. Eventuellement il peut être possible de traiter d'autres types de boues en ajoutant éventuellement des sources microbiologiques si besoin en est.

La composition des boues de stations d'épuration biologique est bien sûr variable en fonction des déchets dont elles proviennent , déchets ménagers et/ou industriels. De manière générale elles ont , après déshydratation mécanique, un taux de siccité qui est de l'ordre de 17 à 22%. La proportion en poids , dans leur matière sèche, est de l'ordre de 50 à 80% de matière organique et de 20 à 50% de matière minérale.

Le procédé de la présente invention n'est cependant pas limité à de telles boues , les boues de stations d'épuration déshydratées sur filtre à bande, filtres presses ou centrifugeuses qui aboutissent à une siccité supérieure à 14% et inférieure à 60% sont transformables par le présent procédé.

D'une manière générale , ce procédé consiste à faire subir à la matière organique contenue dans les boues (principalement les protides du protoplasme des bactéries de l'épuration , les polysaccharides, la cellulose et l'hémicellulose) une digestion aérobie, c'est-à-dire une transformation en composés minéraux simples de différentes formes : solides , liquides et gazeux (gaz carbonique), l'ensemble de ces composés minéraux constituant les composés humiques simples préalables à l'humification. Les différentes étapes de ce procédé ont pour but de créer et de pérenniser un milieu réactif favorable , tant du point de vue physique que chimique , à la minéralisation rapide et aérobie de ladite matière organique des boues.

Les différentes étapes du procédé de l'invention sont schématisées dans la figure unique annexée.

La première étape consiste à ajouter aux boues à traiter des apports consistant dans au moins une matière minérale et dans au moins un composant riche en carbone. D'autres apports complémentaires peuvent être envisagés.

La matière minérale consiste de préférence dans de la terre agricole ordinaire mais saine ou à défaut de la terre de déblai de travaux saine et préalablement préparée. Le tamisage préalable de cette terre et/ou son concassage et laminage pour en retirer les éléments grossiers et les cailloux facilite le traitement final du produit issu du procédé de l'invention. Pour certains types de boues , il peut s'avérer souhaitable de mettre en oeuvre une terre riche en argile ou très sèche.

Cet apport de matière minérale a pour but premier de mettre les boues dans des conditions qui évitent la fermentation anaérobie , génératrice d'odeurs nauséabondes. Le but second - s'agissant de terre agricole, est d'apporter un complément de souches microbiologiques favorables à la digestion aérobie des composés organiques des boues et à leur intégration rapide dans la terre.

Le composant riche en carbone , notamment hydrate de carbone, est de préférence pour une partie sous forme solide et micronisée , avec une taille de particules variant de 0,05 à 0,5mm (50 à 500µm). Cette forme micronisée a pour but de rendre très rapide l'assimilation du carbone disponible. Dans un mode précis de réalisation, le composant riche en carbone , sous forme micronisée , était constitué de farine de bois (lignine) micronisée et séchée. D'une part cette présentation , comparativement à des particules plus grossières , confère au composant une surface d'accessibilité du carbone bien plus importante. D'autre part les végétaux ligneux , sous forme de farine de bois, sont choisis en fonction de la rapidité avec laquelle leur carbone peut être assimilé. Il est préférable d'utiliser des essences ne contenant pas de tanin non hydrolysable. Les essences les plus favorables à l'invention sont l'épicéa, le sapin, l'aulne , le frêne, le peuplier, le hêtre et le chêne (espèces européennes ou américaines). Le fait que la farine de bois soit séchée augmente son pouvoir absorbant et donc sa capacité de restituer l'humidité qui est nécessaire pour le déroulement de la digestion aérobie.

L'apport du composant riche en carbone peut se faire , complémentairement, sous forme de particules plus grossières , par exemple de l'ordre de 0,05 à 3mm. Ceci constitue la réserve carbonée nécessaire à la continuation ,dans le temps ,de la digestion aérobie , conduisant à l'humification proprement dite. Le séchage préalable de telles particules peut également s'avérer nécessaire pour en augmenter le pouvoir absorbant et ainsi permettre la restitution d'eau au cours du processus.

Le but premier de l'apport en composant riche en carbone est d'obtenir, dans le mélange qui va être réalisé avec les boues , un rapport carbone/azote qui soit le plus favorable à la réaction de digestion aérobie recherchée, comme cela sera vu plus précisément ci-après. Généralement la quantité d'azote contenue dans les boues de stations d'épuration est suffisante pour assurer à la faune microbiologique les conditions d'activité idéales. S'agissant en particulier de boues de stations d'épuration urbaines , les résidus pileux ayant résisté à l'action des boues activées constituent une réserve d'azote lentement assimilable qui est suffisante pour le déroulement de l'activité microbiologique aérobie et à la poursuite des réactions d'humification. Dans le cas contraire, si les boues traitées ne présentent pas de réserve d'azote suffisante, il convient, dans les apports complémentaires , d'ajouter une matière azotée sous forme micronisée , comme de la farine issue du broyage de plumes , de cornes ou d'os.

Le taux de carbone dans les boues de stations d'épuration est quant à lui nettement insuffisant et c'est ce qui nécessite l'apport du composant riche en carbone dans des conditions qui seront précisées ci-après.

En fonction des composants initiaux des boues à traiter et également de la matière minérale ajoutée , notamment de la terre végétale ou de déblai, il peut être nécessaire d'effectuer des apports complémentaires avec différents éléments tels que du calcium, du magnésium, du potassium, du phosphore et éventuellement des composés azotés, ces éléments étant nécessaires à la constitution d'un milieu réactif favorable au déroulement de la digestion aérobie recherchée. L'apport de calcium peut se faire sous forme d'hydroxyde , afin d'apporter de manière concomitante une valeur de pH supérieure à 6.

Parmi les composants riches en carbone, il est à souligner l'intérêt d'utiliser des déchets végétaux ayant séjourné sur le sol , notamment des résidus de la transformation de plantes , ayant eu après récolte , un contact prolongé avec le sol tels que les résidus de teillage de lin ou de traitement du chanvre : anas et poussières de lin, chènevotte et poussière de chanvre. Ces déchets végétaux constituent une source de carbone qui de plus contient une faune et une flore favorables à la transformation de la matière organique des boues de stations d'épuration en composés humiques. Bien sûr ces déchets auront été préalablement transformés sous une forme micronisée et sèche.

Dans un exemple précis de réalisation, à partir des données des résultats d'analyses des boues à traiter et des différents apports prévus , on a créé un milieu formé par les boues et lesdits apports, possédant les caractéristiques suivantes :
a) siccité supérieure à 55%,
b) rapport carbone/azote (carbone organique total sur azote organique total) supérieur à 10,
c) rapport matière minérale / matière organique (matière volatile sèche) supérieur à 1,5,
d) teneur en calcium supérieure à la teneur en magnésium, elle-même supérieure à la teneur en phosphore total, elle-même supérieure à la teneur en potassium, avec la teneur en calcium supérieure à 30mg/kg de matière sèche.

La seconde étape du procédé consiste à réaliser, avec le milieu constitué par les boues et les différents apports , un mélange homogène et aéré présentant une granulométrie inférieure à 5mm. Ce mélange s'effectue en mettant en oeuvre un dispositif mélangeur. Il peut s'agir notamment d'un mélangeur à pales ou à socs, à simple ou double flux.

La troisième étape - qui est l'étape de bio-intégration - consiste à maintenir ce mélange dans un état aéré, avec une siccité d'au plus 80%, jusqu'à obtention d'un support de culture comportant des composés humiques simples , résultant de la digestion aérobie des matières organiques contenues dans les boues.

Le maintien du mélange aéré se fait, si nécessaire, par étalement sur une faible épaisseur , inférieure à 30 centimètres ou injection d'air ou mélange gazeux de manière à maintenir le milieu en aérobiose. Il est à noter que la réaction biologique de digestion aérobie est consommatrice d'eau, ce qui nécessite de maintenir la siccité du milieu à un taux d'au maximum 80% , ce qui correspond à un taux d'humidité d'au moins 20%. Eventuellement, mais ce n'est pas totalement indispensable , le milieu peut être chauffé entre 25 et 30°C et l'air injecté maintenu à un taux d'humidité d'environ 80%.

Lors du déroulement du processus réactionnel , il peut se former des amas de particules grossières peu perméables à l'air. Il est donc préconisé, pour maintenir le mélange dans un état aéré , après une période de 48 à 72 heures, de procéder à des opérations d'émiettage, voire de broyage , en sorte d'éliminer ces particules grossières dont la présence est susceptible de ralentir le processus réactionnel. Ces opérations d'émiettage peuvent être suivies d'opérations de tamisage destinées à ne réintroduire dans le mélange que les particules fines , les refus de tamisage étant recyclés dans le dispositif d'émiettage.

On constate dès constitution du mélange , la disparition de l'odeur initiale des boues, puis, au bout d'une courte période , qui peut aller de 3 à 20 jours suivant la nature des boues à traiter et la température ambiante , on constate que l'odeur des boues s'est modifiée pour faire place à une odeur de terre ou d'humus, caractéristique de la transformation de la matière organique en composés humiques. Le produit P ainsi obtenu est un support de culture ou substrat agricole , comportant des composés humiques simples résultant de la digestion aérobie des matières organiques contenues dans les boues à traiter.

Ce produit est alors stocké en tas au moins deux semaines en vue de sa stabilisation et de son utilisation comme support de culture ou substrat prêt à planter , ledit produit pouvant être utilement utilisé pour régénérer biologiquement des sols appauvris en matières humiques ou dégradés (monoculture, incendie, pollution...).

Les refus de tamisage, qui peuvent survenir notamment si le mélange initial présentait une texture et un taux de siccité défavorables, sont broyés ou laminés et éventuellement tamisés à nouveau ou recyclés comme apports de matière minérale et de composants riches en carbone. Ce recyclage intervient notamment s'il est relevé une odeur indicatrice de la subsistance de matière organique non transformée.

Il est à noter que le rapport carbone/azote du mélange doit être constamment supérieur à environ 8,5 compris, y compris à l'issue d'une période de 3 semaines environ après la réalisation initiale du mélange. Etant donné que dans les boues habituelles , ce rapport est de l'ordre de 6 à 8 et que, de plus, une partie du carbone se transforme en gaz carbonique, c'est l'apport du composé riche en carbone qui permet d'obtenir et de maintenir ce rapport dans la condition précitée. Le seuil de 8,5 environ , en fin de process, est nécessaire pour permettre la transformation ultérieure des composés humiques , obtenus par le procédé de l' invention, en humus. De préférence le rapport C/N est maintenu dans une fourchette de 8,5 à 15, qui traduit à la fois l'exigence biologique tenant compte de la quantité d'azote dans les boues à traiter et la contrainte économique, liée au coût du composant riche en carbone à l'état micronisé, notamment la farine de bois. L'ajout de composant riche en carbone, à l'état micronisé, en quantité importante, aboutissant à une valeur du rapport C/N de 20 , voire de 25, peut au début favoriser le déclenchement de la réaction microbiologique de transformation de la matière organique fraîche en composés humiques. Cependant en ajoutant du carbone sous forme d'hydrate, on ajoute de la matière organique et, de plus, on peut être amené à ajouter ensuite de l'azote pour continuer la réaction , du fait d'un éventuel déséquilibre entre azote et carbone. L'ajout important de carbone peut favoriser le déclenchement d'une fermentation et d'une dérive thermophile propre au procédé connu de compostage.

La rapidité de la transformation de la matière organique dépend de la température et également de la quantité de souches microbiologiques présentes dans le mélange. Le fait de recycler tout ou partie du produit obtenu comme apport de manière minérale et de composant riche en carbone permet d'augmenter corrélativement la quantité de souches microbiologiques dans le mélange. On constate ensuite que la durée du processus de transformation diminue.

Ce recyclage est particulièrement intéressant car il fournit aux boues brutes à traiter un apport de souches microbiologiques important et remplace une partie des ingrédients à ajouter aux boues pour obtenir le milieu favorable à la réaction de digestion aérobie. Ce recyclage permet d'économiser des matières premières , accélère la transformation et donc diminue considérablement le coût de production. De préférence ce recyclage est conduit avec un rapport produit recyclé/boues à traiter supérieur à 1,5.

Il n'y a pas d'inconvénient à effectuer le recyclage de manière continue ou en différé.

Le recyclage intervient notamment lorsque le taux de siccité du produit obtenu lors de l'étape de bio-intégration atteint 80%; ceci augmente considérablement la vitesse d'assimilation.

Etant donné que la teneur en eau du mélange , au cours de sa transformation, doit rester maintenue à au moins 20% pour favoriser l'activité microbiologique , il peut être nécessaire d'ajouter de l'eau au cours du déroulement du procédé , en sorte d'éviter un éventuel dessèchement susceptible de ralentir la réaction de digestion aérobie. Cet apport d'eau peut être fait notamment par pulvérisation. Cependant la croissance de certains champignons dans un milieu devenu relativement sec, qui intervient dans le processus de bio-intégration, peut favoriser, pour certaines qualités de boues, la transformation de la matière organique.

L'application du procédé de l'invention à des boues préalablement digérées en anaérobiose est possible mais plus lente , lesdites boues contenant de nombreux inhibiteurs de transformation de l'azote par voie aérobie, susceptibles de ralentir la réaction de digestion aérobie recherchée.

## Revendications

1. Procédé de traitement de boues de stations d'épuration, notamment biologiques, lesdites boues contenant des souches microbiologiques , ayant une siccité donnée, un rapport matière organique/matière minérale donné et un rapport carbone/azote (C/N) donné, **caractérisé en ce qu'**il consiste à :
a) ajouter auxdites boues des apports consistant en une matière minérale, au moins un composant riche en carbone et éventuellement d'autres composants,
b) à procéder au mélange des boues et desdits apports en sorte d'obtenir un mélange aéré, de préférence de porosité à l'air supérieure à 40%,
c) à maintenir le mélange dans un état aéré , avec une siccité d'au plus 80% , jusqu'à obtention d'un support de culture , comportant des composés humiques simples, résultant de la digestion en aérobiose des matières organiques contenues dans les boues,
**en ce que** la quantité de matière minérale ajoutée est déterminée en sorte que le rapport matière organique/matière minérale dans le mélange soit tel qu'il diminue ou empêche la fermentation des matières organiques , et **en ce que** la quantité de composant riche en carbone ajoutée est déterminée en sorte d'obtenir pour le mélange un rapport C/N constamment supérieur à environ 8,5 et de préférence compris entre 8,5 et 15.

2. Procédé selon la revendication 1 **caractérisé en ce que** les apports présentent une granulométrie fine , inférieure ou égale à 5mm , de préférence de 2 à 3 mm.

3. Procédé selon la revendication 2 **caractérisé en ce que** le composant riche en carbone se présente , au moins pour une partie , à l'état micronisé , la taille des particules étant comprise entre 0,05 et 0,5mm.

4. Procédé selon l'une des revendications 1 à 3 **caractérisé en ce que** la matière minérale ajoutée est une terre agricole ordinaire , notamment une terre agricole riche en argile ou une terre de déblai saine.

5. Procédé selon l'une des revendications 1 à 4 **caractérisé en ce que** le composant riche en carbone ajouté est constitué d'hydrate de carbone.

6. Procédé selon la revendication 5 **caractérisé en ce que** le composant riche en carbone, à l'état micronisé, est de la farine de bois, de préférence provenant d'épicéa, de sapin, d'aulne, de frêne, de peuplier , de hêtre ou de chêne.

7. Procédé selon l'une des revendications 1 à 6 **caractérisé en ce que** le composant riche en carbone est une matière végétale ayant séjourné sur le sol, notamment à base de résidus de teillage de lin ou de traitement du chanvre tels que anas et poussières de lin ou chèvenotte ou poussières de chanvre.

8. Procédé selon l'une des revendications 1 à 7 **caractérisé en ce que** le maintien du mélange dans un état aéré est obtenu par broyage, émiettage ou laminage et éventuellement tamisage.

9. Procédé selon l'une des revendications 1 à 8 **caractérisé en ce que** le maintien de la siccité du mélange à une valeur qui est au plus de 80% (ce qui correspond à un taux d'humidité d'au moins 20%) est obtenu, par apport d'eau, notamment par pulvérisation.

10. Procédé selon l'une des revendications 1 à 9 **caractérisé par** l'apport complémentaire de composants contenant du calcium, par exemple sous forme d'hydroxyde ou de carbonate , du magnésium , du potassium , du phosphore et/ou de composés azotés.

11. Procédé selon l'une des revendications 1 à 6 **caractérisé en ce qu'**il comporte une étape de recyclage d'au moins une partie du support de culture obtenu comme apport partiel, voire total , de matière minérale et de composant riche en carbone et également d'apport complémentaire de souches microbiologiques dans le mélange.

12. Procédé selon la revendication 11 **caractérisé en ce que** le recyclage intervient lorsque le mélange atteint un taux de siccité de 80%.

13. Procédé selon l'une des revendications 11 ou 12 **caractérisé en ce que**, lors du recyclage , le rapport produit recyclé / boues à traiter est supérieur à 1,5.
